# EUROPÄISCHE PATENTANMELDUNG

(11) **EP 4 628 852 A1**
(43) Veröffentlichungstag der Anmeldung: **08.10.2025**
(21) Anmeldenummer: 25165575.9
(22) Anmeldetag: 24.03.2025
(51) Int. Cl.: G01F 23/284, G01S 13/34, G01S 13/88, G01F 23/80

(54) **FÜLLSTANDMESSGERÄT ZUR DURCHFÜHRUNG EINER MESSUNG**

(30) Priorität: 26.03.2024 DE 102024202862
(71) Anmelder: VEGA Grieshaber KG, 77709 Wolfach (DE)
(72) Erfinder: HOFERER, Christian, 77652 Offenburg (DE); KAUFMANN, Manuel, 77791 Berghaupten (DE); HERRMANN, René, 77709 Oberwolfach (DE)
(74) Vertreter: Maiwald GmbH

(57) **Zusammenfassung**

Die Erfindung betrifft ein Radarfüllstandmessgerät (100), das zur Durchführung einer Messung (210, 220, 230) zum Bestimmen eines Füllstands (194) eingerichtet ist. Das Bestimmen des Füllstands (194) erfolgt mittels einer FMCW-Messmethode. Das Radarfüllstandmessgerät (100) weist eine Sendevorrichtung (110) auf, eingerichtet zum Senden eines Radarsignals (114) in Richtung einer Füllgutoberfläche (194); eine Empfangsvorrichtung (120), eingerichtet zum Empfangen des von der Füllgutoberfläche (194) reflektierten Radarsignals (124); ein Steuergerät (160), eingerichtet zum Steuern der Sendevorrichtung (110) und der Empfangsvorrichtung (120); und eine Auswahleinrichtung (140), eingerichtet zur Auswahl eines Parametersatzes (150.1) zum Steuern der Sendevorrichtung (110) und der Empfangsvorrichtung (120). Dabei umfasst der Parametersatz (150.1) mindestens eine Messdauer (t_{d}) der Messung (210), eine minimale Messfrequenz (fₘᵢₙ) und eine maximale Messfrequenz (fₘₐₓ) der Messung (210), und eine Anzahl von aufeinanderfolgenden Messungen (210, 220, 230).

## Beschreibung

### Bezugnahme auf verwandte Anmeldungen

Die vorliegende Anmeldung beansprucht die Priorität der deutschen Patentanmeldung Nr. 10 2024 202 862.2, eingereicht am 26. März 2024, die in vollem Umfang durch Bezugnahme in das vorliegende Dokument aufgenommen wird.

### Gebiet der Erfindung

Die Erfindung betrifft ein Füllstandmessgerät zur Durchführung einer Messung, insbesondere ein Füllstandmessgerät, dessen Parameter zur Durchführung der Messung mittels einer Auswahleinrichtung ausgewählt werden können. Weiterhin betrifft die Erfindung eine Verwendung, ein Verfahren und ein nicht-volatiles, computerlesbares Speichermedium.

### Hintergrund

Eine Füllstandmessung kann für eine Vielzahl von Messsituationen durchgeführt werden. Eine Messsituation kann z.B. jeweils ein bestimmtes Füllgut, eine bestimmte Dynamik des Füllgutes, d.h. dessen Befüllungs- und/oder Entleerungsverhalten, eine maximale Distanz zwischen einem minimalen und einem maximalen Füllstand, Optimierungskriterien wie z.B. eine möglichst genaue oder eine möglichst energiesparende Messung, und/oder weitere Umstände der Messung umfassen. In zumindest einigen Fällen kann es erforderlich sein, das Füllstandmessgerät für die spezifische Messsituation anzupassen. Es wäre daher wünschenswert, wenn das Füllstandmessgerät zumindest einen Teil der Anpassungen an eine bestimmte Messsituation automatisiert durchführen könnte.

### Zusammenfassung

Es ist Aufgabe der Erfindung, eine Vorrichtung und/oder ein Verfahren zur Verfügung zu stellen, das zumindest einen Teil der Anpassungen eines Füllstandmessgerätes an eine bestimmte Messsituation automatisiert durchführen kann. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Radarfüllstandmessgerät, das zur Durchführung einer Messung zum Bestimmen eines Füllstands eines Füllgutes eingerichtet ist, wobei das Bestimmen des Füllstands mittels einer FMCW-Messmethode erfolgt. Das Radarfüllstandmessgerät weist auf:
eine Sendevorrichtung, eingerichtet zum Senden eines Radarsignals in Richtung einer Füllgutoberfläche zur Durchführung der Messung;
eine Empfangsvorrichtung, eingerichtet zum Empfangen des von der Füllgutoberfläche reflektierten Radarsignals und zur Auswertung der Messung;
ein Steuergerät, eingerichtet zum Steuern der Sendevorrichtung und der Empfangsvorrichtung;
eine Auswahleinrichtung, eingerichtet zur Auswahl eines Parametersatzes zum Steuern der Sendevorrichtung und der Empfangsvorrichtung,
wobei der Parametersatz mindestens eine Messdauer der Messung, eine minimale Messfrequenz und eine maximale Messfrequenz der Messung, und eine Anzahl von aufeinanderfolgenden Messungen umfasst,

Das Radarfüllstandmessgerät kann beispielsweise zur Durchführung einer Messung zum Bestimmen eines Füllstands, zum Bestimmen einer Topologie, und/oder zum Bestimmen eines Grenzstandes eines Füllgutes eingerichtet sein. Das Füllgut kann beispielsweise eine Flüssigkeit sein, einschließlich einer Emulsion oder Suspension, oder ein Schüttgut, insbesondere ein granuliertes oder pulverförmiges Schüttgut. Das Medium oder Füllgut kann beispielsweise eine Flüssigkeit sein, z.B. Wasser, Saft, Milch, Alkohole, Öle, Farbe, Ketchup, oder auch ein Schüttgut wie z.B. Mehl, Sand, Kaffeepulver, Kunststoffgranulat und/oder eine andere Art von Medium oder Produkt. Das Medium kann sich in einem Behälter befinden. Der Behälter kann z.B. ein Gefäß oder ein Messtank, Prozesstank, Lagertank oder ein Silo von beliebiger Form sein. Beispielsweise kann der Behälter ein Großpackmittel (Intermediate Bulk Container, IBC) sein. Der Behälter kann auch ein Gerinne, beispielsweise ein Bach- oder Flussbett, sein. Das Bestimmen des Füllstands, der Topologie oder des Grenzstands erfolgt mittels einer sogenannten FMCW-Messmethode (FMCW: Frequency Modulated Continuous Wave Radar, oder Dauerstrichradar). Die dazu verwendeten Radarwellen können z.B. einen Frequenzbereich von 1 bis 300 GHz, beispielsweise von 50 bis 100 GHz, umfassen.

Das Radarfüllstandmessgerät umfasst eine Sendevorrichtung, die zum Senden eines Radarsignals in Richtung einer Füllgutoberfläche eingerichtet ist, um die Messung durchzuführen. Die Sendevorrichtung umfasst eine Radarsensoreinheit mit einer Radarantenne beliebiger Form, z.B. eine Hornantenne, eine Planarantenne, und/oder eine andere Form der Radarantenne. Der Typ und/oder die Form der Radarantenne kann von dem Frequenzbereich abhängig sein, der für die Messung verwendet wird.

Das Radarfüllstandmessgerät umfasst weiterhin eine Empfangsvorrichtung, die zum Empfangen des von der Füllgutoberfläche reflektierten Radarsignals eingerichtet ist. Ferner ist die Empfangsvorrichtung zur Auswertung der Messung eingerichtet. Die Auswertung der Messung kann z.B. das Bestimmen des Füllstands, etc., umfassen. Alternativ oder zusätzlich kann die Auswertung das Bestimmen von Parametern der Messung umfassen, beispielsweise eines Signal-Rausch-Abstands des reflektierten Radarsignals.

Das Radarfüllstandmessgerät umfasst weiterhin ein Steuergerät, das zum Steuern der Sendevorrichtung und der Empfangsvorrichtung eingerichtet ist. Das Steuern der Sendevorrichtung und der Empfangsvorrichtung kann beinhalten, der Sendevorrichtung und/oder der Empfangsvorrichtung einen Parametersatz zu übermitteln, der die Messung beeinflusst und/oder Optimierungen für eine spezifische Messsituation umfasst. Die Parameter des Parametersatzes können für eine Messung oder für eine Vielzahl von Messungen gültig sein. Abhängig von dem Typ des Radarfüllstandmessgerätes kann eine unterschiedliche Anzahl von Parametern veränderlich sein. So kann beispielsweise ein Typ des Radarfüllstandmessgerätes einen A/D-Wandler (Analog-Digital-Wandler) eine variable Bitbreite aufweisen, ein anderer Typ des Radarfüllstandmessgerätes jedoch einen A/D-Wandler eine feste, d.h. nicht veränderliche, Bitbreite aufweisen. Der Parametersatz kann daher eine Maske aufweisen, durch welche eine Teilmenge des Parametersatzes als unveränderlich bestimmt oder definiert ist. Dieses Bestimmen der Teilmenge des Parametersatzes als unveränderlich kann die Auswahl des (optimalen) Parametersatzes beeinflussen.

Das Radarfüllstandmessgerät umfasst darüber hinaus eine Auswahleinrichtung, die zur Auswahl eines Parametersatzes eingerichtet ist. Der Parametersatz kann zum Steuern und/oder zu einer der Sendevorrichtung und/oder der Empfangsvorrichtung verwendet werden. Das Steuern kann eine Anpassung an eine Messsituation und/oder an einen bestimmten Typ des Radarfüllstandmessgerätes beinhalten. Der Parametersatz umfasst mindestens eine Messdauer der Messung, eine minimale Messfrequenz und eine maximale Messfrequenz der Messung, und eine Anzahl von aufeinanderfolgenden Messungen. Der Abstand zwischen der minimalen Messfrequenz und der maximalen Messfrequenz der Messung wird gelegentlich als "Bandbreite des Chirps" bezeichnet. Wenn ein "Chirp" oder eine Frequenzrampe z.B. bei 80 GHz startet und bis 84 GHz läuft, ist die Bandbreite demensprechend 4 GHz. Bei der sogenannten FMCW-Messmethode wird die Messfrequenz - z.B. kontinuierlich oder in Stufen - von der minimalen Messfrequenz zu der maximalen Messfrequenz hin verändert. Zumindest einige FMCW-Messmethoden können zur Messung die Messfrequenz von der maximalen zur minimalen Messfrequenz hin verändern; für diese Messmethoden gelten die folgenden Ausführungen in analoger Weise.

Ein derart ausgestaltetes Radarfüllstandmessgerät wird damit in die Lage versetzt, zumindest einen Teil der - für eine optimierte Messung wünschenswerten und/oder erforderlichen - Anpassungen des Füllstandmessgerätes an eine bestimmte Messsituation automatisiert durchzuführen. Dies kann einen Weg zu einer Verwendung einer Art von generischem Radarfüllstandmessgerät weisen, bei dem die optimierten Parameter während des Betriebs automatisiert bestimmt werden. Darüber hinaus kann die beschriebene Methodik eine Grundlage bieten, die automatisiert optimierte Messung noch weiter zu optimieren, insbesondere durch Berücksichtigung weiterer für die Messung relevanter Einflussgrößen. Eine Auswahl und/oder Beispiele von relevanten Einflussgrößen wird im Folgenden beschrieben.

In einigen Ausführungsformen ist die Auswahl des Parametersatzes (mindestens) abhängig von einem Signal-Rausch-Abstand des reflektierten Radarsignals, wobei der Signal-Rausch-Abstand von der Empfangsvorrichtung aus einer Auswertung mindestens einer vorangehenden Messung bestimmt worden ist. Der Signal-Rausch-Abstand ist als Verhältnis zwischen einer Amplitude des reflektierten Radarsignals und dem gemessenen Rauschpegel definiert. Bei einer (üblichen) Darstellung der Amplitude des reflektierten Radarsignals und des Rauschpegels entspricht der Signal-Rausch-Abstand einer Differenz zwischen der Amplitude des reflektierten Radarsignals und dem gemessenen Rauschpegel. Damit die Parameter des Parametersatzes vor der Messung zur Verfügung stehen, kann der Signal-Rausch-Abstand von der Empfangsvorrichtung aus einer Auswertung mindestens einer vorangehenden Messung bestimmt werden. In zumindest einigen Fällen, z.B. für eine Messung nach einem Reset des Radarfüllstandmessgerätes, kann der für die die Auswahl des Parametersatzes verwendete Signal-Rausch-Abstand ein vordefinierter Wert sein.

In einigen Ausführungsformen kann der Parametersatz weiterhin folgende Parameter umfassen, die auch als Teil-Parametersatz für die Sendevorrichtung bezeichnet werden können:
- Eine Amplitude (oder Sendeleistung) des zu sendenden Radarsignals. Um Energie zu sparen, kann es vorteilhaft sein, eine Messung nicht immer mit derselben Amplitude des zu sendenden Radarsignals durchzuführen. Zwar kann eine große Amplitude des Sendesignals für ein aussagekräftiges Messergebnis nützlich sein, dies kann jedoch insbesondere für Radarfüllstandmessgeräte, die nicht an ein reguläres Stromnetz angeschlossen sind, zu einem unnötig hohen Energieverbrauch führen. So kann bei einem hohen Füllstand - d.h. die Füllgutoberfläche ist nahe der Sende- und/oder der Empfangsantenne - eine wesentlich geringere Sendeleistung für ein aussagekräftiges Messergebnis genügen. Eine Anpassung der Amplitude des Sendesignals kann insbesondere für autonome Radarfüllstandmessgeräte vorteilhaft sein, die - z.B. für ein möglichst langes Wartungsintervall - möglichst wenig Energie verbrauchen sollten.
- Eine Rampensteilheit der Messung. Als Rampensteilheit wird der der Anstieg der Messfrequenz pro Zeiteinheit bezeichnet. Für eine schnelle Messung - die z.B. bei einer schnellen Veränderung des Radarfüllstands sinnvoll und/oder nötig sein kann - kann eine hohe Rampensteilheit optimal sein. Bei einer langsamen Veränderung des Radarfüllstands kann eine niedrige Rampensteilheit genügen. Dies kann z.B. zu einer Reduktion des Energieverbrauchs führen.
- Eine Pausenlänge zwischen je zwei Messungen. Eine kurze Pausenlänge, z.B. sogar eine Pausenlänge von Null, kann beispielsweise bei einer schnellen Veränderung des Radarfüllstands und/oder für eine Optimierung des Signal-Rausch-Abstands sinnvoll und/oder erforderlich sein. Eine lange Pausenlänge kann bei einer langsamen Veränderung des Radarfüllstands sinnvoll sein. Für bestimmte Messsituationen kann die automatisierte Anpassung der Pausenlänge sinnvoll sein. Zum Beispiel kann bei einem Gerinne bei Normalpegel eine lange Pausenlänge optimal sein, bei Entstehen von Hochwasser jedoch eine kurze Pausenlänge.

In einigen Ausführungsformen kann der Parametersatz weiterhin folgende Parameter umfassen, die auch als Teil-Parametersatz für die Empfangsvorrichtung bezeichnet werden können:
- Eine Anzahl an Abtastpunkten oder die Abtastfrequenz während der Messdauer der Messung. Eine hohe Anzahl an Abtastpunkten kann z.B. zu einem besseren Signal-Rausch-Abstand führen. Beispielsweise sinkt der Rauschpegel um 3 dB, wenn die Anzahl an Abtastpunkten, verdoppelt wird.
- Eine Bitbreite eines A/D-Wandlers. Für ein Radarfüllstandmessgerät mit einer variablen Bitbreite eines A/D-Wandlers kann es sinnvoll sein, bei niedrigen Pegeln, d.h. einer weiten Entfernung zur Antenne, die Bitbreite zu erhöhen. Andererseits kann eine hohe Bitbreite nicht nur bei der Messung, sondern auch bei weiteren Verarbeitung der Messwerte, eine höhere Prozessorlast - und damit einen höheren Energieverbrauch - bedeuten.
- Eine Auswertestrategie von aufeinanderfolgenden Messungen. Als Auswertestrategie kann dabei unterschieden werden zwischen einer Auswertung jeder einzelnen Messung und einer Auswertung von kumulierten Messungen ("Ensemble-Mittelung" oder "Schar-Mittelung"). Beispielsweise sinkt der Rauschpegel um 3 dB, wenn zwei kumulierte Messungen verwendet werden.

In einigen Ausführungsformen ist die Auswahl des Parametersatzes weiterhin abhängig von:
- Einer Amplitude des reflektierten Radarsignals. Dabei kann insbesondere die Amplitude des reflektierten Radarsignals des an der Füllgutoberfläche reflektierten Radarsignals relevant sein. Für andere Messungen kann auch eine Trennfläche zwischen zwei Medien und/oder eine Amplitude des von einem Boden eines Behälters reflektierten Radarsignals relevant sein. Die Amplitude des reflektierten Radarsignals kann von der Art des Mediums des Füllgutes abhängig sein. Bei einer geringen Amplitude kann es optimal sein, z.B. die Sendeamplitude und/oder den Signal-Rausch-Abstand zu erhöhen.
- Der Bitbreite des A/D-Wandlers der Empfangsvorrichtung. Beispielsweise kann ein Trade-off oder Kompromiss zwischen Abtastfrequenz (Anzahl der Stützpunkte oder Abtastpunkte) und Bitbreite optimal sein.
- Einer aktuell vorhandenen Energie in einem Energiespeicher. So kann z.B. bei wenig vorhandener Energie die Pausenlänger verlängert werden.
- Einer Geschwindigkeit einer Veränderung des Füllstands des Füllgutes. Wenn z.B. die Messdauer zu lang ist, kann eine Ensemblemittelung den Signal-Rausch-Abstand verschlechtern, wenn sich die Füllgutoberfläche zwischen zwei Einzelmessungen bewegt hat. Eine bewegte Füllgutoberfläche kann beispielsweise im ungünstigsten Fall zu einem reflektierten Signal führen, das zwischen zwei Einzelmessungen um 180° phasenverschoben ist; dies führt zu einer verminderten Echoamplitude und reduziert somit den Signal-Rausch-Abstand weiter. Deswegen kann es optimal sein, dass die Bewegungshistorie für die Wahl der Messmethode berücksichtigt wird. Bewegt sich eine Füllgutoberfläche mit einer Geschwindigkeit, die sich negativ auf die Ensemblemittelung auswirkt, kann entsprechen die Messmethode so gewählt werden, dass nur jeweils eine Einzelmessung durchgeführt wird. Auf eine erhöhte Empfindlichkeit wird dann verzichtet

Weiterhin kann die Messmethode kann abhängig von der Parametrierung festgelegt werden. Dies kann insbesondere Geräte betreffen, die bei der Inbetriebnahme vom Kunden/Service parametriert werden. Beispielsweise kann ein Kunde z.B. das zu messende Medium wählen. Aus dieser Wahl kann in zumindest einigen Fällen abgeleitet werden, wie die Reflektionseigenschaften sein werden, d.h. es kann auf Basis dieser Eingabe bereits auf einen Satz von Parametern geschlossen werden. So erfordert z.B. ein schlecht reflektierendes Medium eine Messmethode zur Steigerung des Signal Rausch Abstandes. Dazu könnte z.B. eine Scharmittelung voreingestellt werden.

Auch kann z.B. die zu erwartende Position der Reflexion berücksichtigt werden. So können weiter entfernte Reflexionen eine geringere Amplitude aufweisen als nähere Reflexionen, d.h. die Amplitude des Füllstandes kann entfernungsabhängig sein. Mit diesem Wissen kann die Messmethode ausgewählt werden. Ein einfaches Regelwerk sieht vor, dass ein Satz (d.h. eine Untermenge) von Parametern entfernter Reflektor zu einer Messmethode mit gesteigertem Signal-Rauschabstand führt, was z.B. durch Scharmittelung realisiert sein kann.

Der Satz von Parametern kann auch von Hardwareressourcen abhängig sein. Als Beispiel kann ein aktuell vorhandener Speicher genannt werden, d.h. eine Größe des Speichers, die für die genannten Berechnungen genutzt werden kann. Wird z.B. der Speicher dynamisch allokiert (z.B. als Heap, mit "malloc", "new", etc.) so können Situationen auftreten, bei denen nur wenig Speicher zur Verfügung steht. Als Folge können dann weniger Abtastpunkte einer Messung verarbeitet werden. Dadurch kann sich der Signal-Rauschabstand verschlechtern.

Der Satz von Parametern kann auch aus einem Ergebnis einer Optimierungsfunktion gewählt werden. Können beispielsweise mehrere abgetastete Signale im Speicher abgelegt werden, kann die Signalverarbeitung den Signal-Rausch-Abstand optimieren. So können z.B. zwei, oder mehrere solcher abgelegter Beatkurven oder Echokurven kumuliert ausgewertet werden und mit Signalen im Speicher verglichen werden, die auf Basis einer anderen Kombinatorik berechnet wurden. Die Kombination mit dem höchsten Signal-Rausch-Abstand kann dann für eine Auswertung herangezogen werden. Wenn z.B. 4 Beatkurven im Speicher vorhanden sind, so kann eine erste Scharmittelung aller 4 Beatkurven zu einem SNR (signal noise ratio) von z.B. 80 dB führen, wohingegen eine zweite Scharmittelung (nur der Kurve 1 und 2) zu 85 dB führen kann und eine dritte Scharmittelung (nur von Kurve 3 und 4) zu 80 dB führen kann. Die zweite Art der Mittelung ist daher vorzuziehen.

Alternativ können vor der Mittelung die Beatkurven auf Phasenlage hin ausgewertet werden. Dabei kann ein Kriterium sein, dass die Mittelung dann z.B. nur stattfindet, wenn die Beatkurven konstruktiv interferieren. Diese Auswertung kann sowohl im Zeitbereich der Beatkurve als auch im Frequenzbereich der Echokurve erfolgen.

Der Satz von Parametern kann auch von Umweltdaten abhängig gewählt werden. So kann z.B. bei einer hohen Umgebungstemperatur das Rauschen (thermisches Rauschen) steigen, und die Amplitude des empfangenen und verarbeiteten Signals kann sinken. Diesem Effekt kann z.B. auch mit einer Ensemble-Mittelung entgegengewirkt werden. Auch andere Umwelteinflüsse, wie z.B. eine hohe Luftfeuchtigkeit oder eine ausgasende Flüssigkeit, können das Radarsignal dämpfen. Solchen Umwelteinflüssen kann auch mit einem angepassten Satz von Parametern entgegengewirkt werden.

In einigen Ausführungsformen wird die Auswahl des Parametersatzes auf Basis einer Tabelle durchgeführt wird, oder wird die Auswahl des Parametersatzes auf Basis einer Bestimmung jedes einzelnen Parameters des Parametersatzes durchgeführt. Wenn eine Tabelle als Basis gewählt wird, dann kann diese z.B. auf einer Reihe von Erfahrungswerten basieren, für welche Messsituation welche Parameter sich als optimal erwiesen haben. Wenn die Auswahl des Parametersatzes auf Basis einer Bestimmung jedes einzelnen Parameters des Parametersatzes durchgeführt wird, kann dies eine erhöhte Rechenleistung benötigen. Darüber hinaus kann eine Verifizierung sinnvoll sein, wie gut die berechneten Parameter tatsächlich zu einer Messsituation passen. Beide Ausführungsformen können z.B. in einer Weise kombiniert werden, dass als gut bewertete Parameter als ein spezieller Parametersatz zur Verfügung gestellt werden.

In einigen Ausführungsformen wird die Auswahl des Parametersatzes mittels eines neuronalen Netzes (ANN, Artificial Neural Network) durchgeführt. Das ANN kann in dem Radarfüllstandmessgerät und/oder in einer Cloud angeordnet sein. Ein Training des ANN kann eine Vielzahl von Messsituationen und deren jeweils optimalen Parameter umfassen.

In einigen Ausführungsformen umfasst die Auswahl des Parametersatzes eine Auswahl eines vordefinierten Parametersatzes. Ein vordefinierter Parametersatz kann z.B. nach einem Reset des Radarfüllstandmessgeräts verwendet werden. Ein vordefinierter Parametersatz kann beispielsweise von einem Servicetechniker vorgegeben werden. Wenn zum Beispiel ein Kunde oder ein Servicetechniker bei einer Inbetriebnahme des Füllstandmessgerätes angibt, dass z.B. ein Schüttgut oder eine sich stark bewegte Oberfläche gemessen werden soll, so kann eine empfindliche Messmethode gewählt werden. Ein Umschalten im laufenden Betrieb auf eine unempfindlichere Messmethode kann in einem späteren Schritt nach Auswertung des Signal-Rausch-Abstandes erfolgen, gegebenenfalls mit einer wie oben und/oder nachfolgend beschriebenen Methode. Auch können Messzyklen eingespart werden, wenn bereits bekannt ist, dass die zu erwartende Echoamplitude oder das reflektierte Radarsignal niedrig ausfällt.

In einigen Ausführungsformen ist eine Teilmenge des Parametersatzes als unveränderlich bestimmt. So kann beispielsweise ein Typ des Radarfüllstandmessgerätes einen A/D-Wandler (Analog-Digital-Wandler) eine variable Bitbreite aufweisen, ein anderer Typ des Radarfüllstandmessgerätes jedoch einen A/D-Wandler eine feste, d.h. nicht veränderliche, Bitbreite aufweisen. Der Parametersatz kann daher eine Maske aufweisen, durch welche eine Teilmenge des Parametersatzes als unveränderlich bestimmt oder definiert ist. Dieses Bestimmen der Teilmenge des Parametersatzes als unveränderlich kann die Auswahl des (optimalen) Parametersatzes beeinflussen.

Ein Aspekt betrifft eine Verwendung eines Radarfüllstandmessgeräts wie oben und/oder nachfolgend beschrieben zur Füllstandmessung, zur Topologiebestimmung, und/oder zur Grenzstandbestimmung.

Ein Aspekt betrifft ein Verfahren zur Durchführung einer Messung mittels eines Radarfüllstandmessgeräts wie oben und/oder nachfolgend beschrieben zum Bestimmen eines Füllstands eines Füllgutes, mit den Schritten:
Durchführen einer ersten Messung, wobei das Durchführen der ersten Messung umfasst:
Senden eines ersten Radarsignals in Richtung einer Füllgutoberfläche,
Empfangen des von der Füllgutoberfläche reflektierten ersten Radarsignals, und
Auswerten der Messung, wobei das Auswerten der Messung mindestens ein Bestimmen eines Signal-Rausch-Abstand des reflektierten ersten Radarsignals umfasst; und
Durchführen einer zweiten Messung, wobei das Durchführen der zweiten Messung umfasst:
   Auswählen eines Parametersatzes für die zweite Messung,
   Senden eines zweiten Radarsignals in Richtung der Füllgutoberfläche gemäß einem Teil-Parametersatz für die Sendevorrichtung,
   Empfangen des von der Füllgutoberfläche reflektierten zweiten Radarsignals gemäß einem Teil-Parametersatz für die Sendevorrichtung, und
   Auswerten der zweiten Messung, wobei das Auswerten der zweiten Messung das Bestimmen des Füllstands umfasst.

Ein Aspekt betrifft ein nicht-volatiles, computerlesbares Speichermedium mit einem darin gespeicherten Programm, das, wenn es auf einem Prozessor eines Radarfüllstandmessgerätes wie oben und/oder nachfolgend beschrieben ausgeführt wird, die Vorrichtung anweist, die Schritte wie oben und/oder nachfolgend beschrieben auszuführen.

Es sei noch angemerkt, dass die verschiedenen oben und/oder nachfolgend beschriebenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig. 1**: schematisch ein Radarfüllstandmessgerät gemäß einer Ausführungsform;
- **Fig. 2a und 2b**: schematisch eine oder mehrere Messungen gemäß einer Ausführungsform;
- **Fig. 3a** - **3f**: schematisch Auswirkungen von unterschiedlichen Parametern gemäß einer Ausführungsform;
- **Fig. 4**: ein Flussdiagramm mit einem Verfahren gemäß einer Ausführungsform.

### Detaillierte Beschreibung von Ausführungsformen

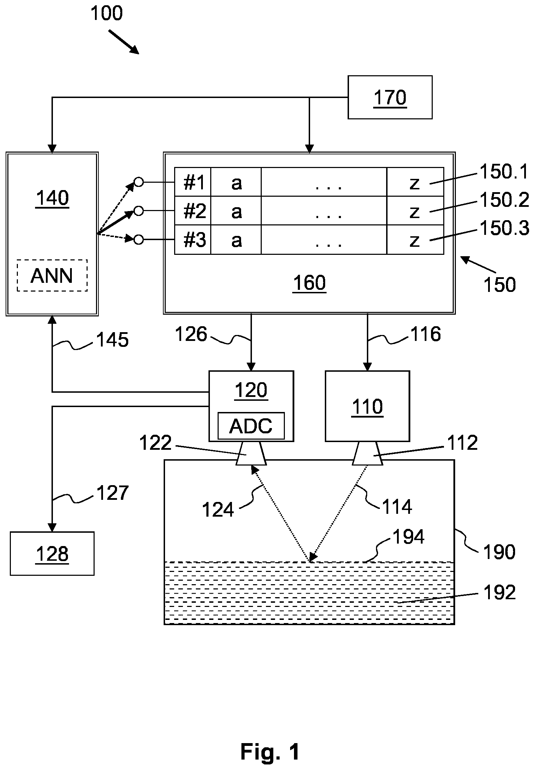

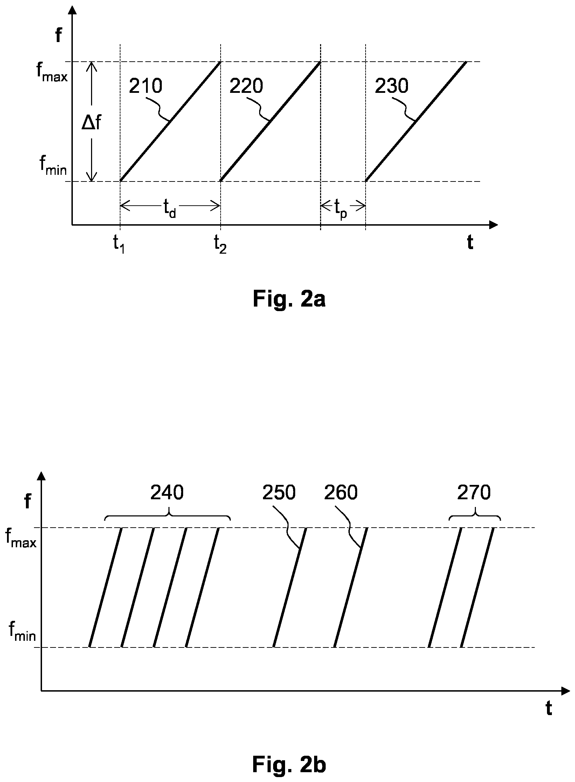

**Fig. 1** zeigt schematisch ein Radarfüllstandmessgerät 100 gemäß einer Ausführungsform. Das Radarfüllstandmessgerät 100 ist zur Durchführung einer Messung 210, 220, 230 (siehe **Fig. 2a**) zum Bestimmen eines Füllstands 194 eines Füllgutes 192 eingerichtet. Das Bestimmen des Füllstands 194 erfolgt mittels einer FMCW-Messmethode. Das Radarfüllstandmessgerät 100 weist eine Sendevorrichtung 110 auf, die zum Senden eines Radarsignals 114 in Richtung einer Füllgutoberfläche 194 eines Behälters 190 eingerichtet ist. Die Position der Füllgutoberfläche 194 wird als Füllstand 194 des Füllgutes 192 bezeichnet. Das Senden des Radarsignals 114 kann als ein (erster) Teil einer Messung 210 interpretiert werden. Ein weiterer Teil der Messung der Messung 210 umfasst ein Empfangen des von der Füllgutoberfläche 194 reflektierten Radarsignals 124 mittels einer Empfangsvorrichtung 120. Das reflektierte Radarsignal 124 wird mittels eines A/D-Wandlers ADC digitalisiert und kann dann weiterverarbeitet werden. Die Empfangsvorrichtung 120 ist ferner zur Auswertung der Messung 210 eingerichtet. Die Auswertung der Messung 210 kann z.B. das Bestimmen des Füllstands 194, einer Topologie (insbesondere bei einer unebenen Füllgutoberfläche 194), und/oder eine Grenzstandbestimmung umfassen. Diese Auswertung kann z.B. an einen Leitstand 128 übermittelt werden. Das Übermitteln kann z.B. über eine Zweileiterschnittstelle oder eine andere Verbindung erfolgen. Alternativ oder zusätzlich kann die Auswertung das Bestimmen von Parametern der Messung umfassen, beispielsweise eines Signal-Rausch-Abstands des reflektierten Radarsignals 124. Die Sendevorrichtung 110 und die Empfangsvorrichtung 120, mit ihren jeweiligen Antennen 112 und 122, sind in Fig. 1 als getrennte Geräte dargestellt; die Vorrichtungen 110 und 120 können jedoch in einem Gerät integriert sein. Auch können die Antennen 112 und 122 als eine einzige Antenne realisiert sein.

Die Sendevorrichtung 110 und die Empfangsvorrichtung 120 werden von einem Steuergerät 160 gesteuert. Zumindest einige Parameter der Sendevorrichtung 110 und der Empfangsvorrichtung 120 können veränderlich sein. Zumindest einige dieser veränderlichen Parameter können von dem Steuergerät 160 über Schnittstellen 116 und 126 verändert werden. Dazu kann das Steuergerät 160 eine Tabelle 150 umfassen, welche z.B. eine Liste (z.B. ein Array) von Parametersätzen 150.1, 150.2, 150.3 enthält. Jeder der Parametersätze 150.1, 150.2, 150.3 kann eine geordnete Menge von optimierten oder optimalen Parametern für je eine Messsituation umfassen. Ein einfaches Beispiel für einen Parametersatz kann sein:
td = 5ms
fmin = 80 GHz
fmax = 84 GHz
n_mess = 4
mit: td = Messdauer, fmin = minimale Messfrequenz, fmax = maximale Messfrequenz, n_mess = Anzahl von aufeinanderfolgenden Messungen.

Eine Auswahl eines Parametersatzes 150.1, 150.2, 150.3 zum Steuern der Sendevorrichtung 110 und der Empfangsvorrichtung 120 wird von einer Auswahleinrichtung 140 vorgenommen. In dem dargestellten Ausführungsbeispiel wird der Parametersatz 150.2 ausgewählt. Die Auswahl des Parametersatzes 150.2 aus den dargestellten Parametersätzen 150.1, 150.2, 150.3 kann eine Vielzahl von Kriterien berücksichtigen bzw. von diesen Kriterien abhängig sein. Als Beispiel kann die Auswahl des Parametersatzes 150.2 von einem Signal-Rausch-Abstand des reflektierten Radarsignals 124 abhängig sein. Der Signal-Rausch-Abstand kann von der Empfangsvorrichtung 120 aus einer Auswertung mindestens einer vorangehenden Messung 210 bestimmt worden sein. In zumindest einigen Fällen, z.B. für eine Messung nach einem Reset des Radarfüllstandmessgerätes 100, kann der für die die Auswahl des Parametersatzes 150.2 verwendete Signal-Rausch-Abstand ein vordefinierter Wert sein. Die Auswahleinrichtung 140 kann ein neuronales Netz (ANN, Artificial Neural Network) umfassen.

Das Radarfüllstandmessgerät 100 weist weiterhin einen Energiespeicher 170 auf, der die einzelnen Einheiten des Radarfüllstandmessgeräts 100 mit Energie versorgt. Der Energiespeicher 170 kann z.B. ein Akku sein. Der Akku kann z.B. über die Leitung 127 oder auf einem anderen Wege geladen werden. Die aktuell vorhandene Energie in dem Energiespeicher 170 kann ein Kriterium für die Auswahl des Parametersatzes 150.2 sein.

**Fig. 2a und 2b** zeigen schematisch eine oder mehrere Messungen 210, 220, 230 gemäß einer Ausführungsform. **Fig. 2a** eine erste Messung 210 mit einer Messdauer t_{d}, zwischen den Zeitpunkten t₁ und t₂. Während der Messdauer t_{d} der Messung 210 wird die Frequenz f zwischen einer minimalen Messfrequenz fₘᵢₙ und einer maximalen Messfrequenz fₘₐₓ verändert. Eine derartige Messung wird auch als "Sweep" oder "Chirp" bezeichnet. In **Fig. 2a** und 2b ist eine lineare Frequenzänderung Δf von fₘᵢₙ nach fₘₐₓ dargestellt. Die Frequenzänderung kann jedoch auch anders gestaltet sein, beispielsweise von fₘₐₓ nach fₘᵢₙ und/oder stufenförmig.

**Fig. 2b** zeigt Beispiele mit jeweils eine unterschiedliche Anzahl von aufeinanderfolgenden Messungen. Eine Messung 240 weist ein nₘₑₛₛ = 4 auf. Dies kann den Signal-Rausch-Abstand um 6 dB senken, gegenüber einer Einzelmessung, d.h. mit nₘₑₛₛ = 1, wie das in den Messungen 250 und 260 realisiert ist. Die Messung 270 weist ein nₘₑₛₛ = 2 auf. Die unterschiedliche Anzahl von aufeinanderfolgenden Messungen kann beispielsweise wegen eines jeweils unterschiedlichen gemessenen Füllstands optimal sein.

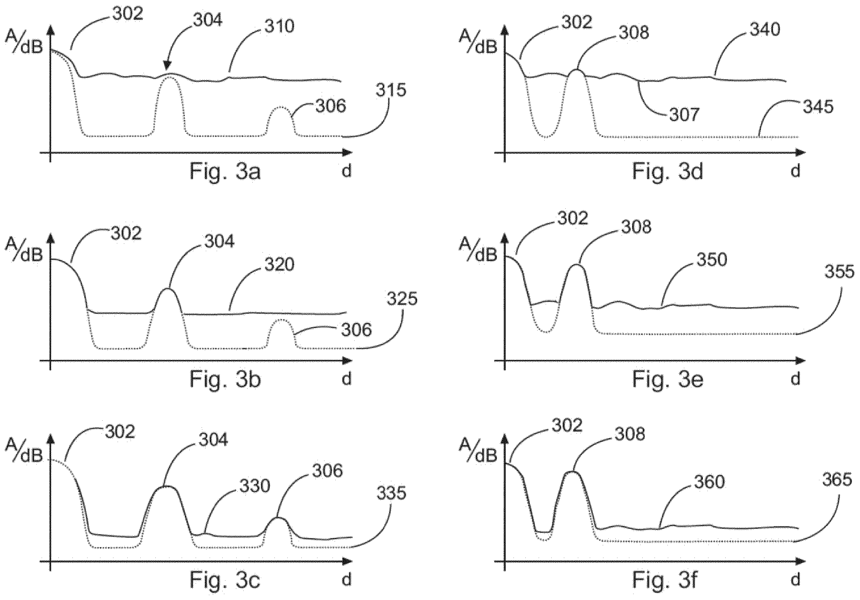

**Fig. 3a - 3f** zeigen schematisch Auswirkungen von unterschiedlichen Parametern, z.B. von einer unterschiedlichen Bitbreite des A/D-Wandlers ADC, gemäß einer Ausführungsform. **Fig. 3a** bis **3f** zeigen Echokurven 310, 320, 330, 340, 350, 360, die bei einer jeweils unterschiedlichen Bitbreite des ADC gemessen werden können. Die mittels des ADC digitalisierte Echokurve 310 von **Fig. 3a** wird von dem ADC mit einer ersten Genauigkeit, beispielsweise einer Amplitudenauflösung von 10 Bit, aus einer analogen Echokurve erzeugt, die den gepunkteten Echokurven 315, 325 (**Fig. 3b**), 335 (**Fig. 3c**) entspricht. Es ist deutlich erkennbar, dass weder das Echo 304 noch das Echo 306 von Echokurve 315 in der digitalen Echokurve 310 von **Fig. 3a** abgebildet werden. Ein Betrieb des Messgerätes mit einer Amplitudenauflösung von 10 Bit führt in diesem beispielsweise daher zu fehlerhaften Messungen. Wird die gleiche analoge Echokurve, wie in **Fig. 3b** als Kurve 325 gezeigt, mit einer zweiten Quantisierungsgenauigkeit m, beispielsweise einer Amplitudenauflösung von 12 Bit, digitalisiert, so kann das Echo 304 gut aufgelöst werden, wohingegen das eigentliche Füllstandecho 306 von Echokurve 325 aufgrund seiner geringen Amplitude noch immer nicht erfasst werden kann. Für die Messsituation des fast vollen Behälters 20 kann es daher erforderlich sein, über die Quantisierungsstufenbestimmungsvorrichtung 152 den ADC derart anzusteuern, dass dieser die der Echokurve mit 14 Bit, wie in **Fig. 3c** gezeigt, erfasst. Hierdurch lassen sich alle relevanten Echos 304, 306 sicher erfassen.

In einer anderen Messsituation, beispielsweise bei einem nahezu gefüllten Behälter 190 kann sich das Messgerät 100 anders verhalten. Eine mit einer ersten Amplitudenauflösung von 10 Bit digitalisierte Echokurve 340, wie in **Fig. 3d** gezeigt, kann das Füllgutecho 308 bereits korrekt auflösen. Zur Steigerung der Zuverlässigkeit kann ergänzend vorgesehen sein, für das Füllgutecho 308 einen größeren Signal-Rausch-Abstand zu verlangen. Bei einer zweiten Amplitudenauflösung von 12 Bit, siehe Kurve 350 in **Fig. 3e****,** kann anhand der digitalisierten Echokurve 350 eine sehr zuverlässige Vermessung des Füllgutechos 308 erfolgen. Eine weitere Steigerung der Genauigkeit bei der Analog-Digital-Wandlung auf 14 Bit, wie sie der Kurve 360 in **Fig. 3f** zugrunde liegt, erzeugt keine zusätzliche Information. Daher kann auf diese feinere Auflösung der Amplitude in dieser Messsituation verzichtet werden. Dies kann eine Reduktion des Energiebedarfs zur Folge haben. Es kann also sinnvoll sein, für einen anderen aktuellen Füllstand einen anderen Parametersatz, wie z.B. 150.3, zu verwenden.

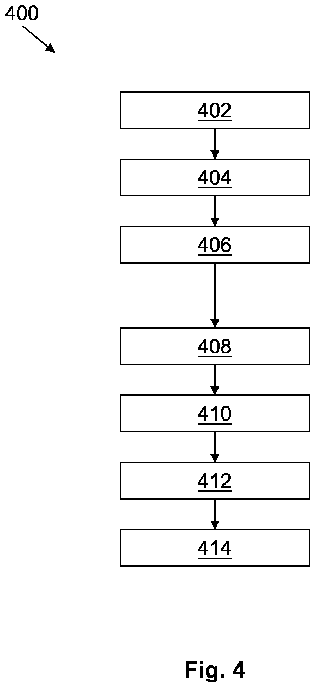

**Fig. 4** zeigt ein Flussdiagramm 400 mit einem Verfahren zur Durchführung einer Messung 210 mittels eines Radarfüllstandmessgeräts 100 gemäß einer Ausführungsform. In einem Schritt 402 wird ein erstes Radarsignal 114 in Richtung einer Füllgutoberfläche 194 gesandt. In einem Schritt 404 wird von der Füllgutoberfläche 194 reflektierte erste Radarsignals 124 empfangen. In einem Schritt 406 wird die Messung 210 ausgewertet, wobei das Auswerten der Messung 210 mindestens ein Bestimmen eines Signal-Rausch-Abstand des reflektierten ersten Radarsignals 124 umfasst.

In einem Schritt 408 wird ein Parametersatz 150.1 für die zweite Messung 220 ausgewählt, wobei das Auswählen des Parametersatzes 150.1 abhängig ist von dem Signal-Rausch-Abstand des reflektierten ersten Radarsignals 124. In einem Schritt 410 wird ein zweites Radarsignals 114 in Richtung der Füllgutoberfläche 194 gesandt, gemäß einem Teil-Parametersatz für die Sendevorrichtung 110. In einem Schritt 412 wird das von der Füllgutoberfläche 194 reflektierte zweite Radarsignal 124 empfangen, gemäß einem Teil-Parametersatz für die Sendevorrichtung 110. In einem Schritt 414 wird die zweite Messung 220 ausgewertet, wobei das Auswerten der zweiten Messung 220 das Bestimmen des Füllstands 194 umfasst.

### Liste der Bezugszeichen

- 100: Radarfüllstandmessgerät
- 110: Sendevorrichtung
- 112: Antenne
- 114: Radarsignal
- 116: Schnittstelle
- 120: Empfangsvorrichtung
- 122: Antenne
- 124: reflektiertes Radarsignal
- 126: Schnittstelle
- 127: Leitung
- 128: Leitstand
- 140: Auswahleinrichtung
- 150: Tabelle mit Parametersätzen
- 160: Steuergerät
- 170: Energiespeicher
- 190: Behälter
- 192: Füllgut
- 194: Füllstand, Füllgutoberfläche
- 150.x: Parametersatz
- 170: Energiespeicher
- 210 - 270: Messungen
- 304 - 308: Maxima
- 310 - 340: Messungen
- 315 - 365: Echokurven
- 400: Flussdiagramm
- 402 - 414: Schritte

## Patentansprüche

1. Radarfüllstandmessgerät (100), das zur Durchführung einer Messung (210, 220, 230) zum Bestimmen eines Füllstands (194) eines Füllgutes (192) eingerichtet ist, wobei das Bestimmen des Füllstands (194) mittels einer FMCW-Messmethode erfolgt, das Radarfüllstandmessgerät (100) aufweisend:
eine Sendevorrichtung (110), eingerichtet zum Senden eines Radarsignals (114) in Richtung einer Füllgutoberfläche (194) zur Durchführung der Messung (210);
eine Empfangsvorrichtung (120), eingerichtet zum Empfangen des von der Füllgutoberfläche (194) reflektierten Radarsignals (124) und zur Auswertung der Messung (210);
ein Steuergerät (160), eingerichtet zum Steuern der Sendevorrichtung (110) und der Empfangsvorrichtung (120); und
eine Auswahleinrichtung (140), eingerichtet zur Auswahl eines Parametersatzes (150.1) zum Steuern der Sendevorrichtung (110) und der Empfangsvorrichtung (120), wobei der Parametersatz (150.1) mindestens eine Messdauer (t_{d}) der Messung (210), eine minimale Messfrequenz (fₘᵢₙ) und eine maximale Messfrequenz (fₘₐₓ) der Messung (210), und eine Anzahl von aufeinanderfolgenden Messungen (210, 220, 230) umfasst.

2. Radarfüllstandmessgerät (100) nach Anspruch 1,
wobei die Auswahl des Parametersatzes (150.1) abhängig ist von einem Signal-Rausch-Abstand des reflektierten Radarsignals (124), wobei der Signal-Rausch-Abstand von der Empfangsvorrichtung (120) aus einer Auswertung mindestens einer vorangehenden Messung (210) bestimmt worden ist.

3. Radarfüllstandmessgerät (100) nach Anspruch 1 oder 2, wobei der Parametersatz (150.1) weiterhin folgenden Teil-Parametersatz für die Sendevorrichtung (110) umfasst:
eine Amplitude des zu sendenden Radarsignals (114),
eine Rampensteilheit (Δf / t_{d}) der Messung (210), und/oder
eine Pausenlänge (tₚ) zwischen je zwei Messungen (210, 220, 230).

4. Radarfüllstandmessgerät (100) nach einem der vorhergehenden Ansprüche, wobei der Parametersatz (150.1) weiterhin folgenden Teil-Parametersatz für die Empfangsvorrichtung (120) umfasst:
eine Anzahl an Abtastpunkten während der Messdauer (t_{d}) der Messung (210),
eine Bitbreite eines A/D-Wandlers, und/oder
eine Auswertestrategie von aufeinanderfolgenden Messungen (210, 220, 230), wobei die Auswertestrategie umfasst, jede der aufeinanderfolgenden Messungen (210, 220, 230) einzeln oder die Messungen (210, 220, 230) kumuliert auszuwerten.

5. Radarfüllstandmessgerät (100) nach einem der vorhergehenden Ansprüche, wobei die Auswahl des Parametersatzes (150.1) weiterhin abhängig ist von:
einer Amplitude des reflektierten Radarsignals (124),
der Bitbreite des A/D-Wandlers der Empfangsvorrichtung (120),
einer aktuell vorhandenen Energie in einem Energiespeicher (170), und/oder
einer Geschwindigkeit einer Veränderung des Füllstands (194) des Füllgutes (192).

6. Radarfüllstandmessgerät (100) nach einem der vorhergehenden Ansprüche, wobei die Auswahl des Parametersatzes (150.1) auf Basis einer Tabelle (150) durchgeführt wird, oder
die Auswahl des Parametersatzes (150.1) auf Basis einer Bestimmung jedes einzelnen Parameters des Parametersatzes (150.1) durchgeführt wird.

7. Radarfüllstandmessgerät (100) nach einem der vorhergehenden Ansprüche,
wobei die Auswahl des Parametersatzes (150.1) mittels eines neuronalen Netzes (ANN) durchgeführt wird.

8. Radarfüllstandmessgerät (100) nach einem der vorhergehenden Ansprüche,
wobei die Auswahl des Parametersatzes (150.1) eine Auswahl eines vordefinierten Parametersatzes umfasst.

9. Radarfüllstandmessgerät (100) nach einem der vorhergehenden Ansprüche,
wobei eine Teilmenge des Parametersatzes (150.1) als unveränderlich bestimmt ist.

10. Verwendung eines Radarfüllstandmessgeräts (100) nach einem der vorhergehenden Ansprüche zur Füllstandmessung, zur Topologiebestimmung, und/oder zur Grenzstandbestimmung.

11. Verfahren zur Durchführung einer Messung (210) mittels eines Radarfüllstandmessgeräts (100) nach einem der Ansprüche 1 - 9 zum Bestimmen eines Füllstands (194) eines Füllgutes (192), mit den Schritten:
Durchführen einer ersten Messung (210), wobei das Durchführen der ersten Messung (210) umfasst:
Senden eines ersten Radarsignals (114) in Richtung einer Füllgutoberfläche (194),
Empfangen des von der Füllgutoberfläche (194) reflektierten ersten Radarsignals (124), und
Auswerten der Messung (210), wobei das Auswerten der Messung (210) mindestens ein Bestimmen eines Signal-Rausch-Abstand des reflektierten
ersten Radarsignals (124) umfasst; und
Durchführen einer zweiten Messung (220), wobei das Durchführen der zweiten Messung (220) umfasst:
Auswählen eines Parametersatzes (150.1) für die zweite Messung (220),
Senden eines zweiten Radarsignals (114) in Richtung der Füllgutoberfläche (194) gemäß einem Teil-Parametersatz für die Sendevorrichtung (110),
Empfangen des von der Füllgutoberfläche (194) reflektierten zweiten Radarsignals (124) gemäß einem Teil-Parametersatz für die Sendevorrichtung (110), und
Auswerten der zweiten Messung (220), wobei das Auswerten der zweiten Messung (220) das Bestimmen des Füllstands (194) umfasst.

12. Nicht-volatiles, computerlesbares Speichermedium mit einem darin gespeicherten Programm, das, wenn es auf einem Prozessor eines Radarfüllstandmessgerätes (100) nach einem der Ansprüche 1 - 9 ausgeführt wird, die Vorrichtung anweist, die Schritte gemäß Anspruch 11 auszuführen.
